(19) Europäisches Patentamt
European Patent Office
Office européen des brevets

(11) **EP 3 500 740 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(21) Anmeldenummer: **17754281.8**

(22) Anmeldetag: **27.07.2017**

(51) Int Cl.:
**F01N 3/20** (2006.01)     **F01N 11/00** (2006.01)

(86) Internationale Anmeldenummer:
**PCT/EP2017/068980**

(87) Internationale Veröffentlichungsnummer:
**WO 2018/033358 (22.02.2018 Gazette 2018/08)**

(54) **VERFAHREN ZUR ERKENNUNG EINER BLOCKIERTEN DRUCKLEITUNG**

METHOD FOR DETECTING A BLOCKED PRESSURE CONDUCT

PROCÉDÉ DE DÉTECTION D'UN CONDUITE DE PRESSION OBSTRUÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2016   DE 102016215380**

(43) Veröffentlichungstag der Anmeldung:
**26.06.2019   Patentblatt 2019/26**

(73) Patentinhaber: **Robert Bosch GmbH**
**70442 Stuttgart (DE)**

(72) Erfinder:
• **BRAEUER, Alexander**
  **70192 Stuttgart (DE)**
• **DENCKER, Florian**
  **71732 Tamm (DE)**

(56) Entgegenhaltungen:
**DE-A1-102011 078 870     DE-A1-102012 200 917**

**Beschreibung**

Die vorliegende Erfindung betrifft ein Verfahren zur Erkennung einer blockierten Druckleitung in einem SCR-System. Des Weiteren betrifft die vorliegende Erfindung ein Computerprogramm, das jeden Schritt des Verfahrens ausführt, wenn sie auf einem Rechengerät abläuft, sowie ein maschinenlesbares Speichermedium, welches das Computerprogramm speichert. Schließlich betrifft die Erfindung ein elektronisches Steuergerät, welches eingerichtet ist, um das Verfahren auszuführen.

Stand der Technik

Heutzutage wird bei der Nachbehandlung von Abgasen einer Verbrennungsmaschine das SCR-Verfahren (Selective Catalytic Reduction) eingesetzt, um Stickoxide (NOx) im Abgas zu reduzieren. Die DE 103 46 220 A1 beschreibt das grundlegende Prinzip. Dabei wird eine 32,5%ige Harnstoff-Wasser-Lösung (HWL), kommerziell auch als AdBlue® bekannt, in das sauerstoffreiche Abgas eindosiert. Hierfür ist ein Dosiermodul vorgesehen, das eine Düse umfasst, um die HWL in den Abgasstrom hinein zu spritzen. Im SCR-Katalysator reagiert die HWL zu Ammoniak, welches sich anschließend mit den Stickoxiden verbindet, woraus Wasser und Stickstoff entstehen. Die HWL wird über ein Fördermodul aus einem Reduktionsmitteltank zum Dosiermodul gepumpt. Zusätzlich ist das Fördermodul über einen Rücklauf mit dem Reduktionsmitteltank verbunden, sodass überschüssige HWL zurückgeführt werden kann.

Typischerweise wird ein Drucksensor in der Druckleitung eingesetzt, um den Systemdruck zu überwachen und infolgedessen unter anderem eine Dosierdauer des Dosiermoduls zu ermitteln. Überdies wird der Drucksensor verwendet, um das Dosiermodul zu Beginn einer Eindosierung (BIP - Begin of Injection Period) und zu ihrem Ende (EIP - End of Injection Period) zu überwachen. Des Weiteren wird aus der BIP- und EIP-Information eine Korrektur der Ansteuerdauer berechnet um somit die Abweichungen der Einspritzmenge beim Öffnen und Schließen des Injektors zu korrigieren.

Die oben erwähnte 32,5%ige HWL gefriert bei ca. -11 °C. Daher muss berücksichtigt werden, dass die Druckleitung aufgrund von gefrorener HWL blockiert sein kann und infolgedessen keine HWL in den Abgasstrang eindosiert wird. In herkömmlichen Überwachungsstrategien wird davon ausgegangen, dass nach dem Auftauen der Druckleitung diese nicht mehr zufriert und entsprechend eine Überwachung des Dosiermoduls zu Beginn der Eindosierung ausreicht.

Beispielsweise beschreibt die DE 10 2012 215 024 A1 ein Verfahren zur Überwachung eines Drucksensors in einem Förder- und Dosiersystem für ein Reaktionsmittel eines SCR-Katalysators. Dieses System umfasst eine Fördereinheit mit einer Förderpumpe und eine Druckleitung, die in eine Dosiereinheit mündet, über die das Reaktionsmittel unter Druck in einen Abgasstrang eingespritzt wird. Es handelt sich um ein druckgeregeltes System, wobei die Regelung und Überwachung des Drucks auf den Signalen eines Drucksensors basieren, der den Druck in der Druckleitung erfasst. Zur Überwachung des Drucksensors sieht das Verfahren vor, eine Durchflussgeschwindigkeitsmessung mittels eines Durchflussgeschwindigkeitssensors in der Druckleitung durchzuführen. Für unterschiedliche Betriebsmodi kann über den Zusammenhang zwischen Durchflussgeschwindigkeit und Druck, sowie dem Vergleich mit einer Referenzmessung, der Drucksensor überwacht werden.

Die DE 10 2012 213 525 A1 beschreibt ein Verfahren zur Überwachung eines Förder- und Dosiersystems. Das Förder- und Dosiersystem selbst ist zur Förderung eines flüssigen Mediums aus einem Tank und zur Dosierung des Mediums über eine Druckleitung und ein erstes Dosiermodul vorgesehen. Es kann insbesondere festgestellt werden, ob eine teilweise oder vollständige Blockierung des Ventils bzw. der Ventile im Dosiermodul vorliegt. Hierfür wird ein Vergleich zwischen einer Dosiermenge bzw. einer Durchflussmenge des Dosiermoduls und einer internen Referenz durchgeführt. Als Referenz werden ein zweites Dosiermodul und eine Rückförderpumpe genannt. Des Weiteren ist der Druckleitung ein Drucksensor zugeordnet.

Offenbarung der Erfindung

Das Verfahren dient der Erkennung einer blockierten Druckleitung in einem SCR-System einer Verbrennungsmaschine. Die Druckleitung ist einerseits mit einem Fördermodul und andererseits mit einem Dosiermodul verbunden und weist zudem einen Drucksensor auf. Das Verfahren umfasst zwei unabhängige Messungen des Drucks in der Druckleitung durch den Drucksensor. Die Messung eines Referenzsignals des Drucks in der Druckleitung wird durchgeführt, wenn keine Eindosierung einer Reduktionsmittellösung durch das Dosiermodul in einen Abgasstrang stattfindet. Zudem erfolgt eine Messung des Drucksignals, während einer Eindosierung einer Dosiermasse der Reduktionsmittellösung durch das Dosiermodul in den Abgasstrang. Für einen späteren Vergleich werden die Messungen über eine gleichlange Messzeit durchgeführt. Die Reihenfolge, in denen die Messungen durchgeführt werden, ist für das Verfahren irrelevant und wird vorzugsweise in Hinblick auf den Betrieb der Verbrennungsmaschine und/oder nebenläufiger Verfahren angepasst.

Im Folgenden werden die Signalenergien der beiden gemessenen Drucksignale berechnet. Die Signalenergie E bezeichnet die Energie eines zeitkontinuierlichen Signals s und wird gemäß der nachstehenden Formel 1 berechnet:

$$E = \int_{-\infty}^{+\infty} s^2(t)\,dt \qquad \text{(Formel 1)}$$

Das Signal s wird zuerst quadriert und dann über die Zeit t integriert. Ist das Signal s nicht über die gesamte Zeit t definiert, so ist das Integral über sämtliche Zeitintervalle zu bilden, in denen das Signal s definiert ist. Physikalisch betrachtet, soll die Signalenergie E und dementsprechend auch das Integral endlich sein.

Für den Fall, dass die Druckleitung nicht blockiert ist, findet bei der Eindosierung ein Druckabfall statt. Um das Druckniveau für die Eindosierung aufrecht halten zu können steigt im Gegenzug die Pumpendrehzahl an. Dies führt zu einer Änderung der Dynamik und dementsprechend zu einer Anregung des Drucksignals. Dadurch steigt die Signalenergie des Drucksignals im Vergleich zur Signalenergie des Referenzsignals merklich an.

Ist die Druckleitung andererseits blockiert, findet keine oder nur eine geringe Eindosierung statt. Als Resultat ändert sich der Druck kaum und die Signalenergie des Drucksignals und des Referenzsignals unterscheiden sich nur unwesentlich.

Schließlich wird ein Verhältnis über einen Quotienten aus der Signalenergie des Drucksignals und der Signalenergie des Referenzsignals berechnet, auf dessen Grundlage die Erkennung der blockierten Druckleitung erfolgt. Wie vorhergehend beschrieben, unterscheiden sich die Signalenergien des Drucksignals und des Referenzsignals für den Fall der nicht blockierten Druckleitung merklich, weswegen das Verhältnis deutlich größer als 1 ist. Wohingegen diese im Falle der blockierten Druckleitung nahezu gleich sind und das Verhältnis demzufolge nahe 1 liegt oder sogar unter 1 liegen kann. Daher erfolgt die Erkennung der blockierten Druckleitung, wenn das Verhältnis der Signalenergien einen ersten vorgebbaren Schwellenwert unterschreitet. Bevorzugt liegt dieser Schwellenwert zwischen 1 und 2 und besonders bevorzugt zwischen 1 und 1,5.

Wird nur eine geringe Dosiermasse der Reduktionsmittellösung eindosiert, kann dies aufgrund eines zu niedrigen Druckabfalls eine fälschliche Erkennung der blockierten Druckleitung bedingen. Daher wird die Messung des Drucksignals vorzugsweise erst durchgeführt, wenn die Dosiermasse eine vorgebbare Grenzmasse überschritten hat.

Es ist bevorzugt, dass die Förderpumpe während der Messung des Referenzsignals einen Solldruck in der Druckleitung aufrecht erhält. Außerdem ist es bevorzugt, dass die Förderpumpe während der Messung des Drucksignals eine Druckänderung aufgrund der Eindosierung der Dosiermasse ausgleicht. Dadurch wird erreicht, dass sowohl das Drucksignal, als auch das Referenzsignal, bei gleichem Solldruck gemessen werden und daher die Vergleichbarkeit dieser Signale erhöht wird.

Gemäß einem weiteren Aspekt können Pumpendrehzahlen der Förderpumpe bei der Erkennung der blockierten Druckleitung berücksichtigt werden. Es ist vorteilhaft, wenn die Pumpendrehzahlen bei der Messung des Referenzsignals sowie während der Messung des Drucksignals in etwa übereinstimmen, da Artefakte im Drucksignal und/oder im Referenzsignal aufgrund sich unterscheidender Pumpendrehzahlen vermieden werden. Dafür ist vorgesehen, dass jeweils die Pumpendrehzahl der Förderpumpe während der Messung des Referenzsignals sowie während der Messung des Drucksignals erfasst werden können. Vorzugsweise erfolgt eine Erkennung der blockierten Druckleitung nur, wenn ein Verhältnis der Pumpendrehzahlen der Förderpumpe zwischen einem vorgebbaren zweiten Schwellenwert und einem vorgebbaren dritten Schwellenwert liegt. Besonders bevorzugt können der zweite Schwellenwert zwischen 1 und 2 und der dritte Schwellenwert zwischen 0,5 und 1 liegen.

Optional kann eine Wartezeit zwischen Beginn der Eindosierung und Messung des Drucksignals vorgesehen sein. Dadurch kann zum einen sichergestellt werden, dass sich die Anregung des Drucksignals bereits in der Druckleitung, insbesondere bis zum Drucksensor, ausgebreitet hat, zum anderen kann ein verzögertes Ansteigen der Pumpendrehzahlen ausgeblendet werden. Alternativ kann die Anregung des Drucksignals auch durch das Dosierventil erfolgen. D. h. die eingestellte Dosierfrequenz kann ebenfalls durch einen Filter im Drucksignal erkannt werden. Wie bei der Änderung der Pumpendrehzahl ist auch die Dosierfrequenz spezifisch und kann über einen Bandpassfilter gezielt ausgewertet werden. In beiden Varianten kann das Drucksignal auf eine überlagerte Störung untersucht werden, die spezifisch für das System ist. Die Pumpe und das Dosierventil eines Dosiersystems sind bei der Analyse des Frequenzbandes im Drucksignal über Bandpassfilter eindeutig zu erkennen.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das erfindungsgemäße elektronische Steuergerät erhalten, welches eingerichtet ist, um die Erkennung der blockierten Druckleitung mittels des Verfahrens durchzuführen.

Kurze Beschreibung der Zeichnungen

Ausführungsbeispiele der Erfindung sind in den Zeichnungen dargestellt und in der nachfolgenden Beschreibung näher erläutert.

Figur 1 zeigt schematisch ein Reduktionsmittelfördersystem eines SCR-Systems, dessen Druckleitung mittels eines Ausführungsbeispiels des erfindungsgemäßen Verfahrens erkannt werden kann.

Figur 2 zeigt ein Ablaufdiagramm eines Ausführungsbeispiels des erfindungsgemäßen Verfahrens.

Figur 3 zeigt ein Diagramm des Drucks über die Zeit für eine nicht blockierte Druckleitung gemäß eines Ausführungsbeispiels des erfindungsgemäßen Verfahrens.

Figur 4 zeigt ein Diagramm des Drucks über die Zeit für eine blockierte Druckleitung gemäß eines Ausführungsbeispiels des erfindungsgemäßen Verfahrens.

Ausführungsbeispiel der Erfindung

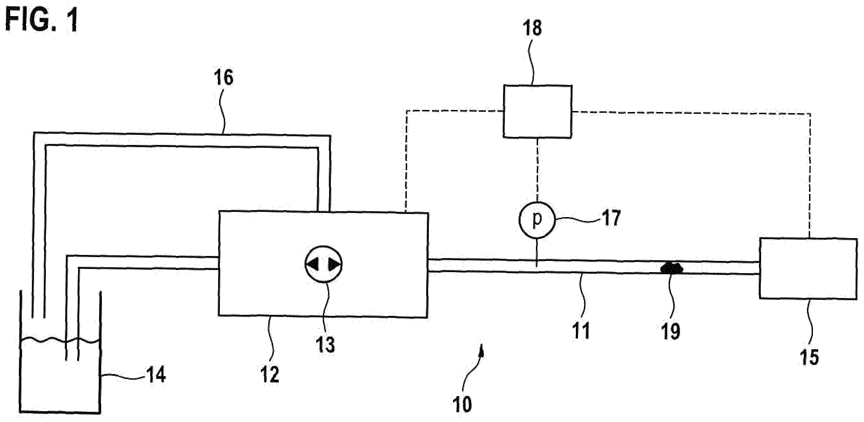

Figur 1 zeigt ein SCR-System 10 zur Förderung von Reduktionsmittel durch eine Druckleitung 11 in einen nicht dargestellten SCR-Katalysator. Es umfasst ein Fördermodul 12, welches eine Pumpe 13 umfasst, die eingerichtet ist Reduktionsmittel aus einem Reduktionsmitteltank 14 zu fördern. Das Fördermodul 12 ist über die Druckleitung 11 mit einem Dosiermodul 15 verbunden, wobei Reduktionsmittel vom Fördermodul 12 durch die Druckleitung 11 zum Dosiermodul 15 gefördert wird, wo es anschließend in einen nicht dargestellten Abgasstrang eindosiert wird. Darüber hinaus umfasst das SCR-System 10 eine Rückförderleitung 16, die das Fördermodul 12 mit dem Reduktionsmitteltank 14 verbindet. Überschüssiges Reduktionsmittel wird vom Fördermodul 12 in den Reduktionsmitteltank 14 zurück gefördert. Des Weiteren weist die Druckleitung 11 einen Drucksensor 17 auf, der den Druck p in der Druckleitung 11 überwacht und der mit einem elektronischen Steuergerät 18 verbunden ist. Das elektronische Steuergerät 18 ist außerdem mit dem Fördermodul 12 und dem Dosiermodul 15 verbunden und kann diese steuern. In der Figur 1 ist überdies eine Verstopfung 19 innerhalb der Druckleitung 11 dargestellt, die den Reduktionsmittelfluss zwischen Fördermodul 12 und Dosiermodul 15 blockiert und die mittels einer Ausführungsform des erfindungsgemäßen Verfahrens erkannt wird. Diese Verstopfung 19 kann dadurch entstehen, dass die Reduktionsmittellösung bei niedrigen Umgebungstemperaturen einfriert. Jedoch können auch andere Faktoren, wie z.B. Verschmutzung, zur Ausbildung einer solchen Verstopfung 19 führen.

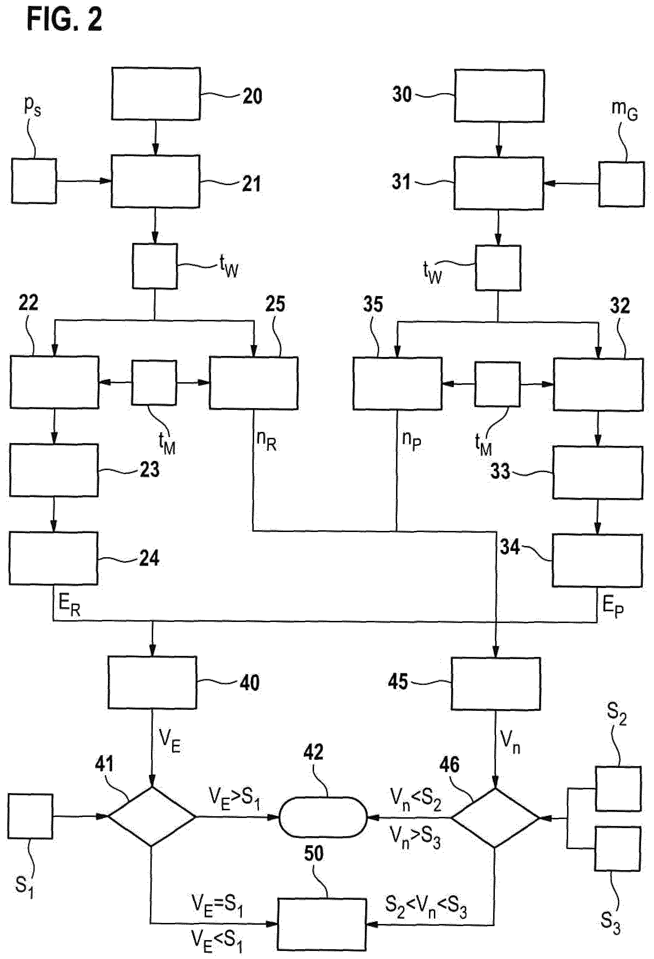

Figur 2 zeigt ein Ablaufdiagramm eines Ausführungsbeispiels des erfindungsgemäßen Verfahrens. Zu Beginn liegt keine Dosieranforderung 20 des SCR-Systems 10 vor, sodass keine Reduktionsmittellösung vom Dosiermodul 15 in den Abgasstrang eindosiert wird. Im Folgenden wird der Druck p auf einen Solldruck $p_s$ eingeregelt 21, wobei die Förderpumpe 13 den Solldruck $p_s$ aufrecht erhält. Nach einer Wartezeit tw erfolgt eine Messung 22 des Referenzsignals, sprich eines Drucksignals, wenn keine Eindosierung einer Reduktionsmittellösung durch das Dosiermodul 15 stattfindet, über eine Messzeit $t_M$. Im Anschluss durchläuft das Referenzsignal einen Tiefpassfilter 23, der langzeitige Änderungen im Signal unterdrückt. Schließlich wird eine Signalenergie $E_R$ des Referenzsignals über die nachstehende Formel 2 berechnet 24. Da die Messung 22 des Referenzsignals nur über die Messzeit $t_M$ erfolgte, wird das quadrierte Referenzsignal nur über die Messzeit $t_M$ integriert, sodass sich die folgende Formel 2 aus Formel 1 ergibt:

$$E = \int_{t_M} s^2(t)\,dt \qquad\qquad \text{(Formel 2)}$$

Während der Messung 22 des Referenzsignals erfolgt zusätzlich eine gemittelte Messung 25 einer Pumpendrehzahl $n_R$ der Förderpumpe 13, ebenfalls über die Messzeit $t_M$.

In diesem Ausführungsbeispiel wird im Anschluss eine Dosieranforderung 30 vorgegeben, um eine Messung 32 des Drucksignals während einer Eindosierung einer Dosiermasse der Reduktionsmittellösung durch das Dosiermodul in den nicht dargestellten Abgasstrang zu realisieren. In anderen Ausführungsbeispielen kann die Messung 32 des Drucksignals während einer Eindosierung auch zeitlich vor der Messung 22 des Referenzsignals stattfinden. Idealerweise wird die Messung 32 des Drucksignals dann durchgeführt, wenn eine Dosieranforderung aufgrund von Betriebsbedingungen der Verbrennungsmaschine und/oder durch parallel ablaufende Verfahren gestellt wird. Wird ein Beginn 31 einer Eindosierung (BIP - Begin of Injection Period) der Dosiermasse festgestellt, die eine Grenzmasse $m_G$ überschreitet, läuft eine Wartezeit tw bis zur Messung 32 des Drucksignals ab, bei der die Förderpumpe 13 eine Druckänderung aufgrund der Eindosierung der Dosiermasse ausgleicht. Die Messung 32 des Drucksignals während der Eindosierung erfolgt über dieselbe Messzeit $t_M$ wie die Messung 22 des Referenzsignals. Das Drucksignal passiert anschließend ebenfalls einen Tiefpassfilter 33. Analog zum Referenzsignal, wird daraufhin die Signalenergie $E_p$ gemäß Formel 2 berechnet. Auch hier erfolgt zusätzlich eine gemittelte Messung 35 der Pumpendrehzahl $n_p$ über dieselbe Messzeit $t_M$.

Liegen die Signalenergie $E_R$ des Referenzsignals und die Signalenergie $E_p$ des Drucksignals während der Eindosierung vor, wird aus beiden ein Verhältnis $V_E$ in Form eines Quotienten gemäß Formel 3 berechtet 40:

$$V_E = \frac{E_p}{E_R} \qquad \text{(Formel 3)}$$

In einer ersten Abfrage 41 wird dieses Verhältnis $V_E$ der Signalenergien $E_R$ und $E_p$ mit einem ersten Sollwert $S_1$ verglichen, der in diesem Ausführungsbeispiel 1,2 ist. Liegt das Verhältnis $V_E$ über dem Sollwert $S_1$, daher deutlich über 1, wird das Verfahren beendet 42, da keine Verstopfung 19 oder eine andere Art von Blockierung der Druckleitung 11 vorliegt.

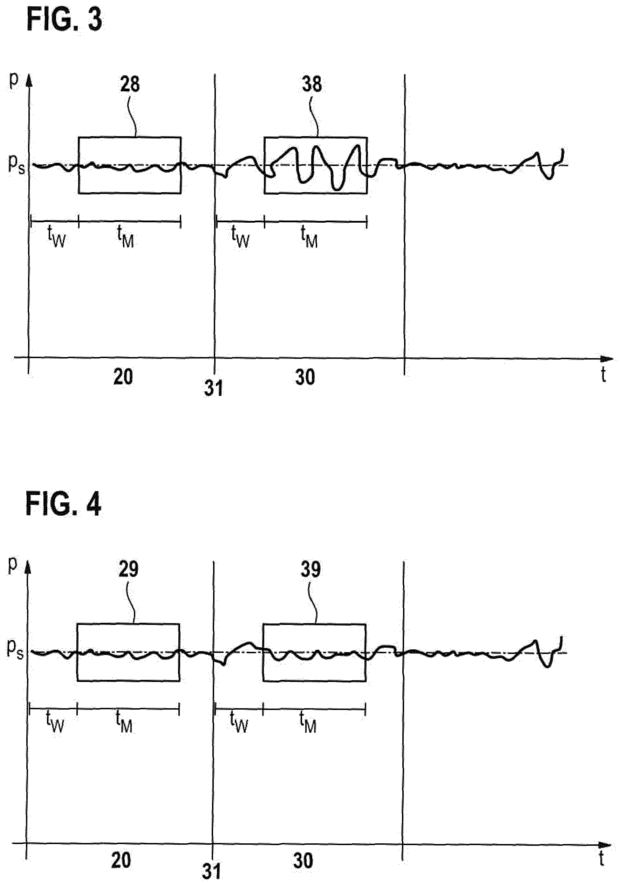

In Figur 3 wird jener Zusammenhang nochmals verdeutlicht. Hierbei liegt keine Verstopfung 19 oder eine andere Art von Blockierung der Druckleitung 11 vor. In Figur 3 ist ein Diagramm des vom Drucksensor 17 aufgenommenen Drucksignals für den Fall, dass keine Dosieranforderung 20 vorliegt, und für den Fall der vorliegenden Dosieranforderung 30 dargestellt. Im Bereich 28 ist der Druck p über die Messzeit $t_M$ nahe am Solldruck $p_s$. Dahingegen zeigt der Druck p bei vorliegender Dosieranforderung 30 im Bereich 38, nach Ablauf der Wartezeit tw ab dem Beginn 31 der Eindosierung, eine erkennbar größere Anregung, die aufgrund einer Änderung der Dynamik durch eine Anpassung der Pumpendrehzahl $n_p$ hervorgerufen wird. Demzufolge ist die Signalenergie $E_p$ während der vorliegenden Dosieranforderung 30, also bei Eindosierung einer Dosiermasse der Reduktionsmittellösung, deutlich größer als die Signalenergie $E_R$, wenn keine Dosieranforderung 20 und somit keine Eindosierung vorliegt. Als Resultat ist das Verhältnis $V_E$ der Signalenergien bei nicht blockierter Druckleitung 11 deutlich größer als 1.

In einem weiteren Schritt 45 des Ablaufdiagramms aus Figur 2 wird zudem ein Verhältnis $V_n$ der Pumpendrehzahlen $n_R$ und $n_p$ der Förderpumpe 13 berechnet. Dafür wird gemäß Formel 4 ein Quotient der beiden Pumpendrehzahlen $n_R$ und $n_p$ gebildet:

$$V_p = \frac{n_p}{n_R} \qquad \text{(Formel 4)}$$

In einer zweiten Abfrage 46 wird dann geprüft, ob das Verhältnis $V_n$ der Pumpendrehzahlen $n_R$ und $n_p$ innerhalb eines durch einen zweiten Sollwert $S_2$ und einen dritten Sollwert $S_3$ gebildeten Intervalls liegt. In diesem Ausführungsbeispiel sind der zweite Sollwert $S_2$ 0,66 und der dritte Sollwert $S_3$ 1,5. Durch diese Abfrage 46 wird festgestellt, ob die beiden Pumpendrehzahlen $n_R$ und $n_p$ nahezu identisch sind. Ist dies nicht der Fall wird das Verfahren beendet 42, da das Verhältnis $V_E$ der Energiesignale $E_R$ und $E_p$ keine Aussagekraft mehr besitzt.

Eine Erkennung 50 der blockierten Druckleitung 11 erfolgt, wenn das Verhältnis $V_n$ der Pumpendrehzahlen $n_R$ und $n_p$ bei der zweiten Abfrage 46 zwischen dem zweiten Sollwert $S_2$ und dem dritten Sollwert $S_3$ liegt und zusätzlich die erste Abfrage zeigt, dass das Verhältnis $V_E$ der Energiesignale $E_R$ und $E_p$ kleiner oder gleich dem ersten Sollwert $S_1$ ist.

In Figur 4 ist der Fall der durch die Verstopfung 19 blockierten Druckleitung 11 dargestellt. Es ist ebenfalls ein Diagramm des vom Drucksensor 17 aufgenommenen Drucksignals für den Fall, dass keine Dosieranforderung 20 vorliegt, und für den Fall der vorliegenden Dosieranforderung 30 dargestellt. Analog zu Figur 3 ist der Druck p im Bereich 29 für die Messzeit $t_M$ nahe am Solldruck $p_s$. Bei der Messung 22 des Referenzsignals werden hier keine Unterschiede zwischen einer blockierten und einer nicht blockierten Druckleitung 11 erwartet, wenn die übrigen Betriebsbedingungen unverändert sind. Im Bereich 39 sind indes Unterschiede zum Bereich 38 aus Figur 3 ersichtlich. Auch nach Ablauf der Wartezeit $t_W$ ab dem Beginn 31 der Eindosierung, entspricht der Verlauf des Drucks p bei vorliegender Dosieranforderung 30 in etwa dem Verlauf des Drucks p, wenn keine Dosieranforderung 20 vorliegt. Dieser Zusammenhang ist erwiesen, da sich der Druck p bei blockierter Druckleitung 11 ebenso verhält, wie bei geschlossenem Dosiermodul 15. Daher kann eine blockierte Druckleitung 11 erkannt 50 werden, wenn die Signalenergien $E_R$ und $E_p$ in etwa übereinstimmen oder die Signalenergie $E_R$ des Referenzsignals sogar größer als die Signalenergie $E_p$ des Drucksignals bei Eindosierung ist und demzufolge das Verhältnis $V_E$ kleiner oder gleich dem ersten Sollwert $S_1$ ist. In diesem Ausführungsbeispiel wurde eine Verstopfung 19 als Ursache für die blockierte Druckleitung 11 verwendet. Jedoch können auch andere Faktoren, wie beispielsweise ein blockiertes Dosiermodul 15, hierfür verantwortlich sein.

**Patentansprüche**

1. Verfahren zur Erkennung einer blockierten Druckleitung (11) in einem SCR-System (10) einer Verbrennungsmaschine, welches eine Förderpumpe (13), ein Dosiermodul (15) und einen Drucksensor (17) aufweist, umfassend die folgenden Schritte:

   - Messen (22) eines Referenzsignals eines Drucks (p) in der Druckleitung (11) über eine Messzeit ($t_M$), wenn keine Eindosierung einer Reduktionsmittellösung durch das Dosiermodul (15) stattfindet und berechnen einer Signalenergie ($E_R$) des Referenzsignals;
   - Messen (32) eines Drucksignals über die Messzeit ($t_M$), während einer Eindosierung einer Dosiermasse der Reduktionsmittellösung durch das Dosiermodul (15) und berechnen einer Signalenergie ($E_p$) des Drucksignals;
   - Berechnen (40) eines Verhältnisses ($V_E$) der Signalenergie ($E_p$) des Drucksignals zu der Signalenergie ($E_R$) des Referenzsignals; und
   - Erkennen (50) der blockierten Druckleitung (11), wenn das Verhältnis ($V_E$) einen ersten vorgebbaren Schwellenwert (S1) unterschreitet.

2. Verfahren nach Anspruch 1, **dadurch gekennzeichnet, dass** die Messung (32) des Drucksignals erst durchgeführt werden, wenn die Dosiermasse eine vorgebbare Grenzmasse überschritten hat (31).

3. Verfahren nach Anspruch 1 oder 2, **dadurch gekennzeichnet, dass** die Förderpumpe (13) während der Messung (22) des Referenzsignals einen Solldruck ($p_s$) in der Druckleitung (11) aufrecht erhält (21).

4. Verfahren nach einem der vorherigen Ansprüche, **dadurch gekennzeichnet, dass** die Förderpumpe (13) während der Messung (32) des Drucksignals eine Druckänderung aufgrund der Eindosierung der Dosiermasse ausgleicht.

5. Verfahren nach einem der vorherigen Ansprüche, **dadurch gekennzeichnet, dass** jeweils eine Pumpendrehzahl ($n_R$; $n_p$) der Förderpumpe (13) während der Messung (22) des Referenzsignals sowie während der Messung (32) des Drucksignals erfasst wird und die Erkennung (50) der blockierten Druckleitung (11) nur erfolgt, wenn ein Verhältnis ($V_n$) der Pumpendrehzahlen ($n_R$; $n_p$) zwischen einem vorgebbaren zweiten Schwellenwert ($S_2$) und einem vorgebbaren dritten Schwellenwert ($S_3$) liegt.

6. Verfahren nach einem der vorherigen Ansprüche, **dadurch gekennzeichnet, dass** eine Wartezeit ($t_W$) zwischen Beginn (31) der Eindosierung und Messung (32) des Drucksignals abläuft.

7. Computerprogramm, welches eingerichtet ist, das Verfahren nach einem der Ansprüche 1 bis 6 durchzuführen.

8. Maschinenlesbares Speichermedium, auf welchem ein Computerprogramm nach Anspruch 7 gespeichert ist.

9. Elektronisches Steuergerät, welches eingerichtet ist, um mittels eines Verfahrens nach einem der Ansprüche 1 bis 6 eine blockierte Druckleitung zu erkennen.

**Claims**

1. Method for detecting a blocked pressure line (11) in an SCR system (10) of an internal combustion engine, which has a conveyor pump (13), a metering module (15), and a pressure sensor (17), comprising the following steps:

   - measuring (22) a reference signal of a pressure (p) in the pressure line (11) over a measuring time ($t_M$) when no injection of a reducing agent solution by the metering module (15) takes place and computing a signal energy ($E_R$) of the reference signal;
   - measuring (32) a pressure signal over the measuring time ($t_M$) during an injection of a metered mass of the reducing agent solution by the metering module (15) and computing a signal energy ($E_p$) of the pressure signal;
   - computing (40) a ratio ($V_E$) of the signal energy ($E_p$) of the pressure signal to the signal energy ($E_R$) of the reference signal; and
   - detecting (50) the blocked pressure line (11) if the ratio ($V_E$) falls below a first predefinable threshold value ($S_1$).

2. Method according to Claim 1, **characterized in that** the measurement (32) of the pressure signal is only carried out when the metered mass has exceeded (31) a predefined limiting mass.

**3.** Method according to Claim 1 or 2, **characterized in that** the conveyor pump (13) maintains (21) a setpoint pressure ($p_s$) in the pressure line (11) during the measurement (22) of the reference signal.

**4.** Method according to any one of the preceding claims, **characterized in that** the conveyor pump (13) compensates for a pressure change as a result of the injection of the metered mass during the measurement (32) of the pressure signal.

**5.** Method according to any one of the preceding claims, **characterized in that** a pump speed ($n_R$; $n_p$) of the conveyor pump (13) is detected in each case during the measurement (22) of the reference signal and during the measurement (32) of the pressure signal and the detection (50) of the blocked pressure line (11) only takes place if a ratio ($V_n$) of the pump speeds ($n_R$; $n_p$) is between a predefinable second threshold value ($S_2$) and a predefinable third threshold value ($S_3$).

**6.** Method according to any one of the preceding claims, **characterized in that** a waiting time ($t_W$) passes between the beginning (31) of the injection and the measuring (32) of the pressure signal.

**7.** Computer program, which is configured to carry out the method according to any one of Claims 1 to 6.

**8.** Machine-readable storage medium, on which a computer program according to Claim 7 is stored.

**9.** Electronic control unit, which is configured to detect a blocked pressure line by means of a method according to any one of Claims 1 to 6.

**Revendications**

**1.** Procédé permettant de détecter une conduite sous pression (11) obstruée dans un système SCR (10) d'un moteur à combustion interne qui comporte une pompe de refoulement (13), un module de dosage (15) et un capteur de pression (17), comprenant les étapes suivantes :

- mesurer (22) un signal de référence d'une pression (p) dans la conduite sous pression (11) pendant un temps de mesure ($t_M$) lorsqu'aucun dosage d'une solution d'agent réducteur par le module de dosage (15) n'a lieu et calculer une énergie de signal ($E_R$) du signal de référence ;
- mesurer (32) un signal de pression pendant le temps de mesure ($t_M$), lors d'un dosage d'une masse de dosage de la solution d'agent réducteur par le module de dosage (15) et calculer une énergie de signal ($E_p$) du signal de pression ;
- calculer (40) un rapport ($V_E$) de l'énergie de signal ($E_p$) du signal de pression à l'énergie de signal ($E_R$) du signal de référence ; et
- détecter (50) la conduite sous pression (11) obstruée lorsque le rapport ($V_E$) passe en dessous d'une première valeur de seuil (S1) pouvant être prédéfinie.

**2.** Procédé selon la revendication 1, **caractérisé en ce que** la mesure (32) du signal de pression n'est effectuée que lorsque la masse de dosage a dépassé une masse limite (31) pouvant être prédéfinie.

**3.** Procédé selon la revendication 1 ou 2, **caractérisé en ce que**, pendant la mesure (22) du signal de référence, la pompe de refoulement (13) maintient (21) une pression de consigne ($p_s$) dans la conduite sous pression (11).

**4.** Procédé selon l'une des revendications précédentes, **caractérisé en ce que**, pendant la mesure (32) du signal de pression, la pompe de refoulement (13) compense une variation de pression due au dosage de la masse de dosage.

**5.** Procédé selon l'une des revendications précédentes, **caractérisé en ce qu'**une vitesse de rotation ($n_R$ ; $n_p$) de la pompe de refoulement (13) est détectée pendant la mesure (22) du signal de référence ainsi que pendant la mesure (32) du signal de pression et la détection (50) de la conduite sous pression (11) obturée n'est effectuée que lorsqu'un rapport ($V_n$) des vitesses de rotation de la pompe ($n_R$ ; $n_p$) se situe entre une deuxième valeur de seuil ($S_2$) pouvant être prédéfinie et une troisième valeur de seuil ($S_3$) pouvant être prédéfinie.

**6.** Procédé selon l'une des revendications précédentes, **caractérisé en ce qu'**un temps d'attente ($t_w$) s'écoule entre le début (31) du dosage et la mesure (32) du signal de pression.

7. Programme informatique conçu pour mettre en œuvre le procédé selon l'une des revendications 1 à 6.

8. Support de stockage lisible par machine sur lequel est stocké un programme informatique selon la revendication 7.

9. Appareil de commande électronique conçu pour détecter une conduite sous pression obstruée au moyen d'un procédé selon l'une des revendications 1 à 6.

FIG. 1

# FIG. 2

# FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10346220 A1
- DE 102012215024 A1
- DE 102012213525 A1